# EUROPÄISCHE PATENTSCHRIFT

(11) **EP 2 062 838 B1**
(45) Veröffentlichungstag und Bekanntmachung des Hinweises auf die Patenterteilung: **01.09.2010**
(21) Anmeldenummer: 08020378.9
(22) Anmeldetag: 24.11.2008
(51) Int. Cl.: B65G 59/00

(54) **Verfahren und Vorrichtung zur Entfernung von Zwischenablagen von palettierten Waren und Gütern**
Method and device for removing intermediate sheet between palletised goods
Méthode et dispositif destinés au retrait de feuilles intermédiaires entre produits palettisés

(30) Priorität: 26.11.2007 DE 102007056826
(43) Veröffentlichungstag der Anmeldung: 27.05.2009
(73) Patentinhaber: FPT Projekt GmbH, 88279 Amtzell (DE)
(72) Erfinder: Steinhauser, Dieter, 88287 Grünkraut (DE)
(74) Vertreter: Riebling, Peter

(56) Entgegenhaltungen:
- DE-B1- 2 222 678
- US-A- 4 787 810
- US-A1- 2008 193 272

## Beschreibung

Gegenstand der vorliegenden Erfindung ist ein Verfahren und eine Vorrichtung zur Entfernung von Zwischenlagen von palettierten Waren und Gütern nach dem Oberbegriff des Patentanspruches 1.

Es ist z.B aus dem DE 2222678 B1 bekannt, dass, wenn man palettierte Waren und Güter von Paletten entfernt, zwischen jeder Lage einer Palette eine entsprechende Zwischenlage angeordnet ist. Es besteht dann das Problem, dass man mit Hilfe eines Sauggreifers oder eines ähnlichen Fördermittels jeweils die Palette mit lagenweise übereinander angeordneten Gütern entleeren will, wobei schichtweise die auf der Palette gelagerten Waren von oben nach unten entnommen werden. Hierzu ist es bekannt, sogenannte Sauggreifer zu verwenden, die sich von oben an die oberste Schicht der Güter anlegen und alle Güter dieser Schicht gemeinsam ansaugen. Hierbei besteht das Problem, dass an den Gütern, die dann am Sauggreifer hängen, unten noch - in unerwünschter Weise - die Zwischenlage anhaftet. Diese Zwischenlage, die z. B. aus einem Papier, einem Karton oder einem Stoffzuschnitt besteht, muss zuverlässig entfernt werden. Fallweise kann es auch vorkommen, dass bei übereinandergestapelten Gütern auf einer Palette keine Zwischenlage vorhanden ist.

Die mittels eines Sauggreifers nach oben von der Palette entnommenen Güter werden dann auf ein Fördersystem gesetzt, welches in der Lage ist, die parallel auf ein Fördersystem gesetzten Güter seriell zu vereinzeln.

Bei der Entfernung der Zwischenlage gibt es die bekannte Möglichkeit, dass die schichtweise abgehobene Lage von Gütern auf eine Saugplattform gelegt wird, und diese Saugplattform hat vakuumunterstützte Gurtförderer. Es ist ein Abschieber vorhanden, der in der Lage ist, alle Waren über diese Saugplattform hinwegzuschieben.

Für eine Anwendung ist es bekannt, die Waren von oben auf die Saugplattform mit dem saugunterstützten Gurtförderer zu stellen, wobei die zu entfernende Zwischenlage direkt auf die Oberfläche des saugunterstützten Gurtförderers gelangt. Es wird sodann Vakuum an den Gurtförderer angelegt, und die Zwischenlage wird dank dieses Vakuums auf der Saugplattform festgehalten, während die auf der Zwischenlage lagernden Güter mit dem Abschiebebalken über diese Saugplattform abgeschoben werden.

Im abgeschobenen Zustand verbleibt deshalb die Zwischenlage auf dem Gurtförderer und die darauf lagernden Güter werden mit dem Abschiebebalken wegbewegt.

Es wird dann der vakuumunterstützte Saugförderer in Betrieb genommen und das auf ihm festgesaugte Papier in Gegenrichtung zur Abschiebebewegung nach hinten wegtransportiert.

Bei dieser bekannten Entfernung einer Zwischenlage besteht allerdings der Nachteil, dass die Zwischenlage nur relativ undefiniert entfernt werden kann, denn sie wird in Richtung nach hinten entfernt, und zwar in gleicher Ebene, wie der Saugförderer arbeitet. Weil dieses Zwischenlagepapier bei angetriebenem Saugförderer nach hinten abtransportiert wird, bekommt es eine gewisse Relativgeschwindigkeit - wegen der Geschwindigkeit des Saugförderers - und beim Abheben vom Saugförderer segelt es zu Boden, was zu undefinierten Landungen der Zwischenlage führt. Es kommt deshalb zu einem undefinierten Ablegen des Zwischenlagepapiers, und damit besteht der Nachteil, dass dieses Zwischenlagepapier einen relativ hohen Platzbedarf beim Ablagern hat.

Weiterer Nachteil ist, dass ein relativ teurer vakuumunterstützter Gurtförderer verwendet werden muss, was zu hohen Herstellungs- und Wartungskosten führt.

Der Erfindung liegt deshalb die Aufgabe zugrunde, ein Verfahren und eine Vorrichtung der eingangs genannten Art so weiterzubilden, dass mit wesentlich einfacheren Mitteln, kostengünstiger und schneller eine Zwischenlage definiert von einer darüber lagernden Warenschicht abgetrennt werden kann.

Zur Lösung der gestellten Aufgabe ist ein Verfahren **dadurch gekennzeichnet, dass** in dem Verfahrensschritt, bei dem die Zwischenlage auf dem Saugtisch aufliegt, der Saugtisch mindestens halbiert ist und in der Art einer Klapptür nach unten wegklappt, um das Zwischenlagepapier definiert nach unten abfallen zu lassen.

Mit der gegebenen technischen Lehre ergibt sich der wesentliche Vorteil, dass auf einen vakuumunterstützten Förderer verzichtet werden kann und dass vor allem der Nachteil entfällt, dass der Förderer das Papier in Förderrichtung transportieren muss, wodurch es eine Längsgeschwindigkeit erhält und undefiniert zu Boden segelt.

Bei der vorliegenden Erfindung wird vielmehr eine Art Klapptür oder Falttür geöffnet, und die Zwischenlage fällt gewichtsbedingt gerade und unbeschleunigt und durch keinerlei Fördermechanismen beeinflusst nach unten in einen Schacht, wo es definiert abgelegt wird.

Damit ergibt sich der wesentliche Vorteil, dass nun durch die definierte Ablage der Zwischenlage eine sehr gute Stapelung und Verdichtung aller Zwischenlagen möglich ist, weil diese genau definiert übereinandergelegt einen sehr komprimierten Stapel bilden. Es können deshalb eine Vielzahl von Zwischenlagen auf einem sehr engen Platzbedarf gestapelt werden. Damit können also sehr viele Zwischenlagen auf engem Raum gestapelt werden, und der Ablageraum für die Zwischenlagen ist sehr platzsparend direkt unterhalb dem Vakuumtisch angeordnet und nicht mehr neben oder seitlich des Vakuumtisches, wie es beim Stand der Technik der Fall war.

In einer bevorzugten Ausgestaltung der vorliegenden Erfindung wird es bevorzugt, wenn der Vakuumtisch zwei symmetrische Vakuumplatten aufweist und in der Mitte zwischen den Vakuumplatten eine Trennlinie vorhanden ist, so dass genau die beiden Vakuumplatten in der Art einer Falltür sich nach unten liegend öffnen. Der mittige Trennspalt erweitert sich so zu einer groß dimensionierten Durchfallöffnung, durch welche das Zwischenlagepapier gewichtsbedingt herunterfällt und in einen dort darunter angeordneten Schacht hineinfällt und sich dort ausrichtet und stapelweise übereinander ablegt.

Statt der Ausbildung einer Trennlinie parallel zur Förderrichtung des Abschiebebalkens ist es in einer anderen Ausgestaltung der Erfindung vorgesehen, dass diese Trennlinie senkrecht zur Bewegungsrichtung des Abschiebebalkens verläuft.

In einer dritten Ausgestaltung kann es vorgesehen werden, dass anstatt zwei schwenkbar ausgebildeten Vakuumplatten auch mehr als zwei schwenkbare Vakuumplatten angeordnet sind, z. B. drei oder mehrere.

Die vorliegende Erfindung ist nicht darauf beschränkt, dass die Ablagefläche für die Ablage der Zwischenlage auf einem Saugprinzip arbeitet. In einer anderen Ausgestaltung der Erfindung kann es vorgesehen sein, dass statt des Saugprinzips, mit dem das Zwischenlagepapier festgehalten wird, auch andere Festhaltemechanismen verwendet werden. Solche Festhaltemechanismen sind z.B. ein Nadelgreifer, der spitz schräg in die Lage der Zwischenlage eingreifende Nadeln aufweist, um so diese Zwischenlage festzuhalten. Werden die Nadeln zurückgezogen, dann liegt die Zwischenlage definiert auf diesem Nadeltisch, und es ist dann ebenfalls vorgesehen, dass dieser Nadeltisch als Falltürmechanismus ausgebildet ist, so dass beim Zurückziehen der Nadeln die Falltür geöffnet und die Zwischenlage gewichtsbedingt vertikal nach unten abgelegt wird.

Das Grundprinzip der vorliegenden Erfindung liegt im Wesentlichen darin, dass man mit dem Abschiebebalken die von der Zwischenlage zu trennenden Güter so abschiebt, dass man die Güter über die Zwischenlage abschieben kann, die von dem darunter liegenden Haltetisch festgehalten wird. Hierbei ist es relativ gleichgültig, welchen Haltemechanismus man verwendet, es ist nur wichtig, dass die Haltekraft für die Zwischenlage so groß gewählt ist, dass beim Abschieben der Güter die Zwischenlage nicht mit abgeschoben wird. Aus diesem Grund kann deshalb die Platte, auf der die Zwischenlage liegt, als Saugplatte, als Nadelplatte oder auch Gefriergreiferplatte ausgebildet sein.

Eine solche Gefriergreiferplatte besteht im Wesentlichen aus einer Anzahl von gleichmäßig über den Tisch verteilt angeordneten Gefriergreifern, die unterhalb der Gefriertemperatur einen Eispanzer an der Unterseite der Zwischenlage temporär erzeugen und so die Zwischenlage festhalten. Sobald die Ware über die Zwischenlage abgeschoben ist, wird die Gefriertemperatur gelöst und die Vereisung an der Unterseite der Zwischenlage entfernt, wodurch dann wiederum durch das beschriebene Falltürprinzip die Zwischenlage gesteuert vertikal nach unten in einen unterhalb des Tisches angeordneten Schacht hineinfällt.

Demzufolge bezieht sich die vorliegende Erfindung auf alle die Palettiereinrichtungen, bei denen eine Ware schichtweise von einer Palette abgehoben wird und wobei die schichtweise angeordneten Waren durch jeweils Zwischenlagen voneinander getrennt sind.

In einer Weiterbildung der vorliegenden Erfindung ist es im Übrigen vorgesehen, dass - bei der Ausbildung des Tisches mit Falltür als Saugtisch - dafür gesorgt ist, dass ein möglichst geringer Vakuumverbrauch gegeben ist.

Zu diesem Zweck ist vorgesehen, dass die im Tisch angeordneten Unterdruckdüsen gesteuert sind, und zwar in Abhängigkeit von der Fläche der auf den Tisch abgesetzten Güter. Es erfolgt also eine Steuerung der Düsen in Abhängigkeit vom Belegungsgrad des Saugtisches. Hierbei gibt es verschiedene Möglichkeiten, die Düsenzuführung zu steuern. Die Düsen können beispielsweise in Förderrichtung in Balkenform angeordnet werden, wobei in Förderrichtung spaltenförmige Düsen angeordnet sind, und jede Spalte kann ein- und ausgeschaltet werden. Auf diese Weise ist es möglich, beispielsweise die linke und rechte äußerste Spalte stillzulegen, wenn sich herausstellt, dass die Belegungsfläche des Tisches nur in der Mitte gegeben ist.

Dass heißt, die Düsen können zeilen- und spaltenweise abgeschaltet werden, und in einer anderen Ausgestaltung ist es möglich, die Düsen auch einzeln anzusteuern und einzuschalten oder abzuschalten.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: perspektivische Ansicht eines Zwischenlage-Vereinzelungstisches, bei dem die Ware bereits schon abgeschoben ist
- Figur 2:: die Draufsicht auf die Anordnung nach Figur 1
- Figur 3:: zeigt einen Zwischenlage-Vereinzelungstisch mit darauf abgelegten Gütern, die auf einer Zwischenlage ruhen
- Figur 4:: zeigt das Abschieben der Güter von der Zwischenlage, wobei die Zwischenlage auf den Saugplatten festgehalten wird
- Figur 5:: zeigt die teilweise nach unten gefallene Zwischenlage, wenn die Saugplatten geöffnet sind
- Figur 6:: zeigt die vollkommen nach unten abgefallene Zwischenlage, die definiert auf einem Stapel aufgestapelt wird

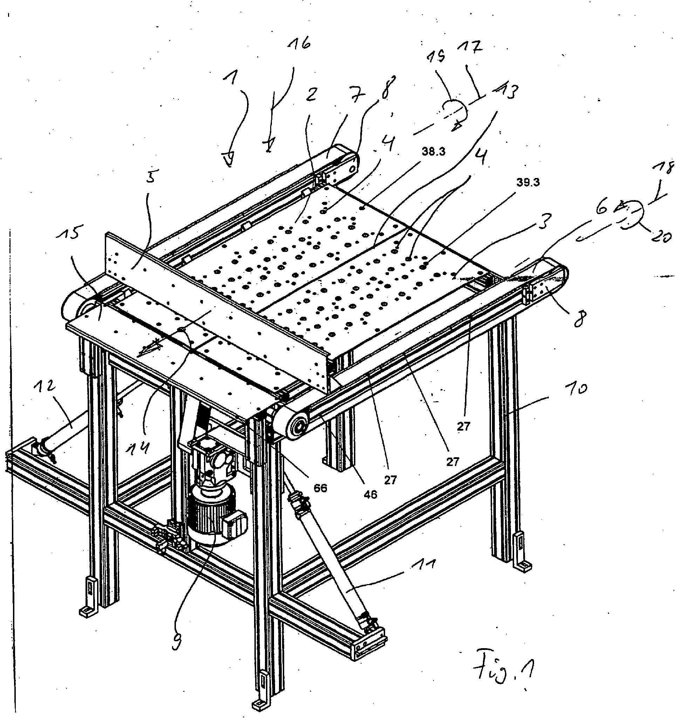

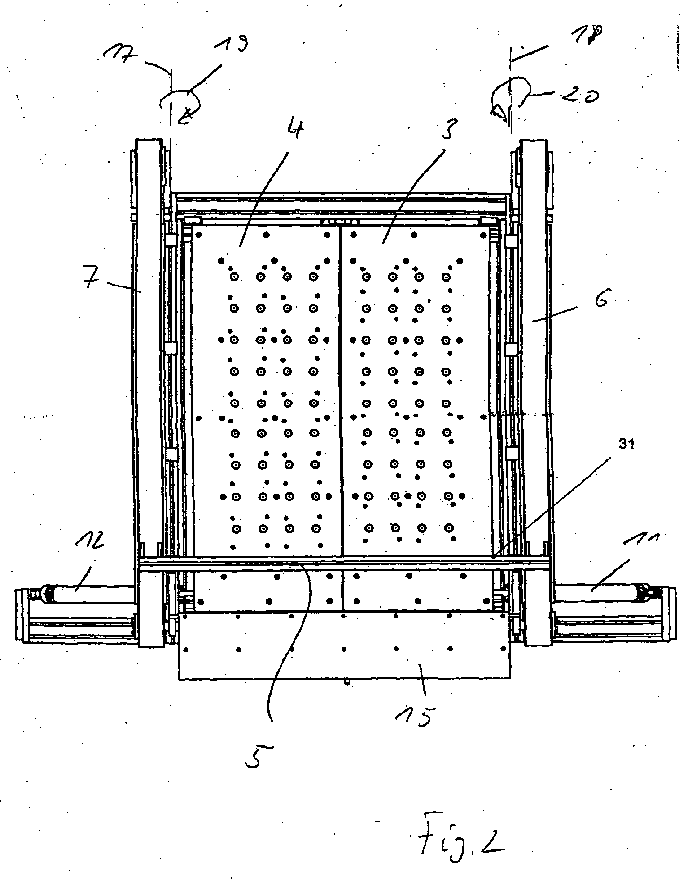

In Figur 1 und 2 ist allgemein eine Zwischenlage für Tisch 1 dargestellt, der zwei Saugplatten (2, 3) aufweist, wovon mindestens eine der Saugplatten (2, 3) in einer horizontalen Ebene schwenkbar ist.

In der dargestellten Figur 1 sind beide angeordneten Saugplatten (2, 3) in einer horizontalen Ebene schwenkbar.

Die Saugplatten 2, 3 sind gleich groß ausgebildet und durch eine Trennebene 13 voneinander getrennt.

Jede Saugplatte 2, 3 weist eine Anzahl von Saugdüsen 4 auf, die möglicherweise auch getrennt ansteuerbar sind.

Oberhalb der Saugplatte 2, 3 ist ein Abschiebebalken 5 angeordnet, der in Pfeilrichtung 14 (Abschieberichtung) und in Gegenrichtung verschiebbar angetrieben ist. Zu diesem Zweck ist der Abschiebebalken 5 an den beiden Enden jeweils fest mit einem Förderband 6, 7 verbunden, wobei jedes Förderband 6, 7 Teil eines Gurtförderers 8 ist.

Zusätzlich ist der Abschiebebalken mit einer Messeinrichtung verbunden (hier nicht näher dargestellt), welche je nach gemessenen Messwert des Widerstandes beim Abschieben der Güter eine Zuordnung als Ware oder als Zwischenlage zulässt, da eine Zwischenlage einen geringeren Widerstand im Vergleich zu einem Produkt ausbildet.

Der Antrieb des Gurtförderers 8 mit den beiden Förderbändern 6, 7 erfolgt durch einen unterhalb am Tisch angeordneten Antrieb 9.

Der Schwenkantrieb der Saugplatte 2, 3 erfolgt im gezeigten Ausführungsbeispiel über einen Schwenkzylinder 11, 12, wobei jeder Schwenkzylinder an dem einen Ende an dem Tisch angeordnet ist und mit seinem oberen, kolbenseitigen Ende an dem schwenkbaren Teil der jeweiligen Saugplatte 2, 3 angreift.

Mit der Ansteuerung des Schwenkzylinders 11, 12 wird demzufolge jede Saugplatte 2, 3 jeweils in die Schwenkachse 17, 18 in den Pfeilrichtungen 19, 20 verschwenkt, so dass sich eine Art Falltür ergibt.

Man erkennt, dass am Auslauf der Saugplatten 2, 3 ein Übergangsblech 15 vorhanden ist, mit dem die vom Abschiebebalken 5 in Pfeilrichtung 14 abgeschobene Ware auf ein anschließendes Fördersystem gefördert wird. Im Übrigen ist in Figur 1 und 2 noch dargestellt, dass die Güter von oben her in Pfeilrichtung 16 auf die Oberfläche der Saugplatten 2, 3 aufgesetzt werden.

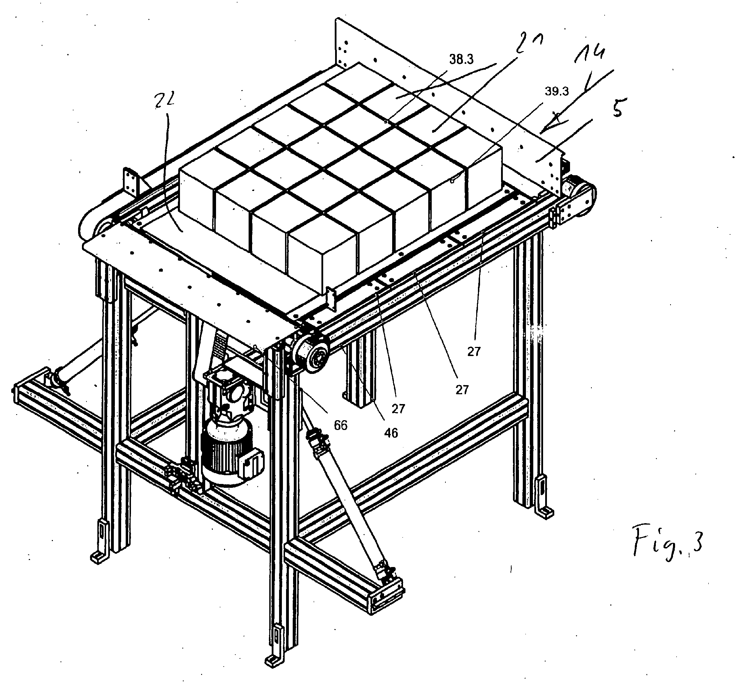

Die Figur 2 zeigt die Draufsicht auf die Anordnung nach Figur 1, und die Figur 3 zeigt ein praktisches Anwendungsbeispiel, wo erkennbar ist, dass der Abschiebebalken 5 sich in der vorderen Stellung befindet und auf dem Zwischenlage-Vereinzelungstisch 1 eine Vielzahl von Gütern 21 abgesetzt sind, die auf einer Zwischenlage 22 ruhen.

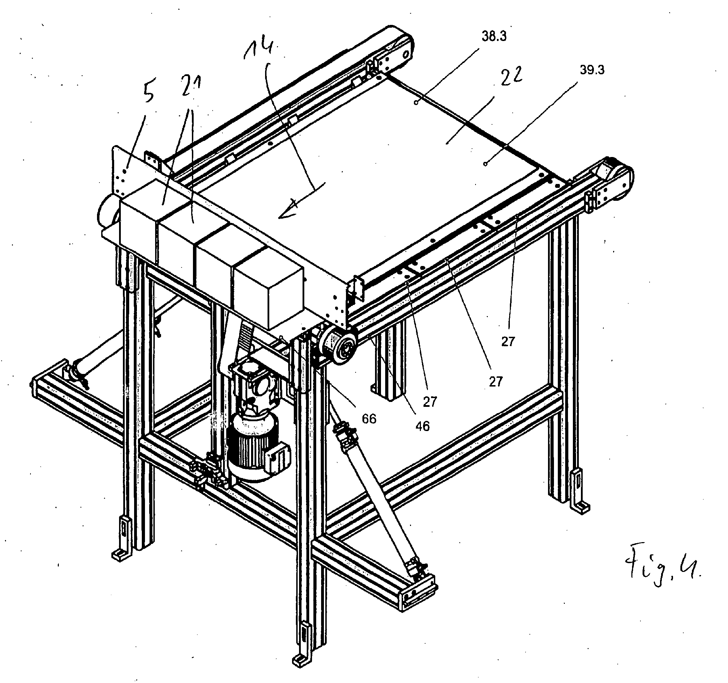

Wichtig ist nun der Übergang zur Figur 4, wo erkennbar ist, dass diese der Saugplatten 2, 3 die Zwischenlage 22 saugend auf den Saugplatten 2, 3 festgehalten wird, während der Abschiebebalken 5 in Abschieberichtung 14 über die festgehaltene Zwischenlage 22 geschoben wurde und auf den Saugplatten 2, 3 festgehalten wird.

Die Güter 21 werden demzufolge auf ein nachgeschaltetes Bandsystem gefördert, während die Zwischenlage 22 auf den Saugplatten 2, 3 festgehalten wird.

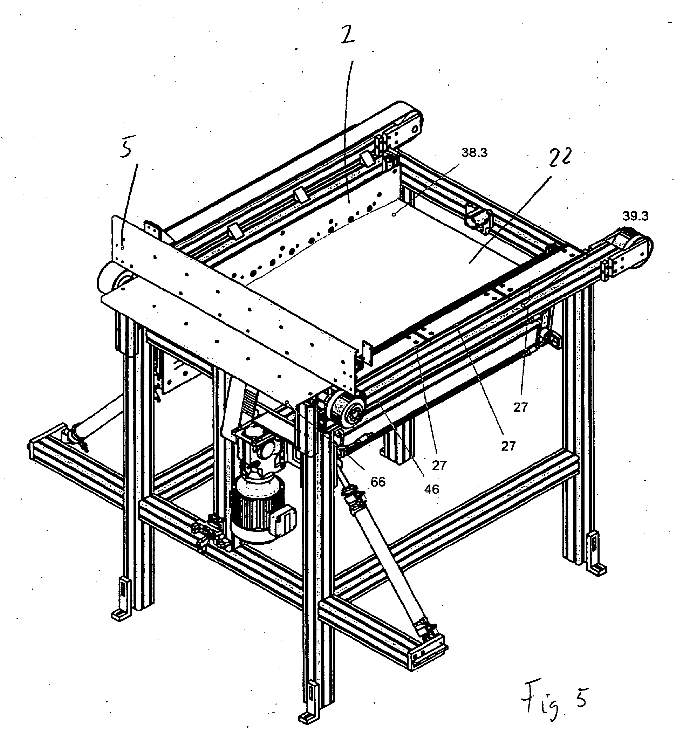

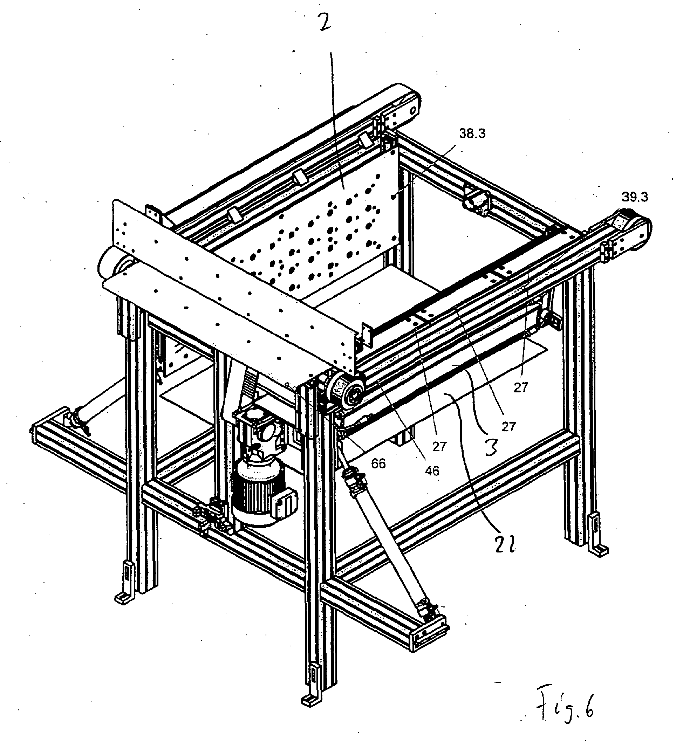

In Figur 5 öffnen sich die beiden Saugplatten 2, 3 falltürartig bei dem Abschiebebalken 5 in der vorderen Position und man erkennt, dass die Zwischenlage 22 nun durch die entstehende Öffnung nach unten gewichtsbedingt fällt. Dies ist in Figur 6 dargestellt, wo erkennbar ist, dass die Saugplatten 2, 3 vollkommen geöffnet sind und die Zwischenlage 22 nach unten abgefallen ist. Wichtig hierbei ist, dass die Saugplatte 2, 3 gleichzeitig die seitlichen Wandungen eines Schachtes bilden und so gleichzeitig eine Führung für die Zwischenlage 22 beim Fall nach unten ausbilden. Damit wird die Zwischenlage 22 zentriert nach unten fallen gelassen und im unteren Bereich unterhalb des Zwischenlagen-Vereinzelungstisches 1 gesteuert abgestapelt.

**Zeichnungslegende**
- 1: Zwischenlage-Vereinzelungstisch
- 2: Saugplatte
- 3: Saugplatte
- 4: Saugdüse
- 5: Abschiebebalken
- 6: Förderband
- 7: Förderband
- 8: Gurtförderer
- 9: Antrieb (für 5)
- 10: Maschinengestell
- 11: Schwenkzylinder
- 12: Schwenkzylinder
- 13: Trennebene
- 14: Abschieberichtung
- 15: Übergangsblech
- 16: Pfeilrichtung
- 17: Schwenkachse
- 18: Schwenkachse
- 19: Pfeilrichtung
- 20: Pfeilrichtung
- 21: Güter
- 22: Zwischenlage

## Patentansprüche

1. Vorrichtung zur Entfernung von Zwischenlagen (22) von palettierten Waren und Gütern (21), wobei die Waren und Güter (21) in einer übereinander liegenden Anordnung auf der Palette gelagert sind und vorzugsweise eine Zwischenlage (22) zwischen den einzelnen Schichten aufweisen, welche Zwischenlage (22) zusammen mit den Waren und Gütern (21) schichtweise auf einem Fördersystem abgelegt werden, welches die parallel abgesetzten Waren und Güter (21) seriell vereinzelt, wobei das Fördersystem einen Gurtförderer mit einer Saugplattform (2,3) als Saugtisch aufweist, welche Saugplattform (2,3) die Zwischenlage (21) mittels Vakuum festhält, **dadurch gekennzeichnet, dass** der Saugtisch aus mindestens zwei voneinander getrennten Saugplatten (2, 3) gebildet ist, wobei mindestens eine Saugplatte (2, 3) in der Art einer angeordneten Klapptüre in einer horizontalen Ebene verschwenkbar ist.

2. Vorrichtung nach Anspruch 1, **dadurch gekennzeichnet, dass** die beiden Saugplatten (2, 3) etwa gleich groß sind und eine Anzahl von getrennt ansteuerbaren Saugdüsen (4) aufweisen, wobei die Saugplatten (2, 3) mittels einer Trennebene (13) voneinander getrennt sind.

3. Vorrichtung nach einem der vorhergehenden Ansprüche 1 bis 2, **dadurch gekennzeichnet, dass** ein oberhalb der Saugplatte (2, 3) angeordneter Abschiebebalken (5) in Pfeilrichtung (14) und in Gegenrichtung verschiebbar angetrieben ist, welcher Abschiebebalken (5) mit zwei Fördebänden (6, 7) verbunden ist, wobei jedes Förderband (6, 7) Teil eines Gurtförderers (8) ist, der mittels einem mit einer Kraftmesseinrichtung verbunden ist, welche bei entsprechendem Messwert eine Zuordnung der Güter als Zwischenlage oder als Ware ausbildet.

4. Vorrichtung nach einem der vorhergehenden Ansprüche 1 bis 3, **dadurch gekennzeichnet, dass** die mindestens eine Saugplatte (2, 3) mittels einem angeordneten Schwenkzylinder (11, 12) schwenkbar ist, wobei jeder Schwenkzylinder (11, 12) an dem einen Ende des Tisches angeordnet ist und mit seinem oberen, kolbenseitigen Ende an dem schwenkbaren Teil der jeweiligen Saugplatte (2, 3) angreift.

5. Vorrichtung nach einem der vorhergehenden Ansprüche 1 bis 4, **dadurch gekennzeichnet, dass** der Schwenkzylinder (11, 12) der Saugplatte (2, 3) jeweils um eine Schwenkachse (17, 18) in Pfeilrichtungen (19, 20) verschwenkbar ist, wodurch die Saugplatte (2, 3) als eine Art Falltür ausgebildet ist.

6. Vorrichtung nach einem der vorhergehenden Ansprüche 1 bis 5, **dadurch gekennzeichnet, dass** die Saugplatte (2, 3) an ihrem Auslauf ein Übergangsblech (15) aufweist, welches die vom Abschiebebalken (5) in Pfeilrichtung (14) abgeschobenen Güter (21) auf ein anschließendes Fördersystem fördert, welche Güter (21) zuvor von oben her in Pfeilrichtung (16) auf die Oberfläche der Saugplatten (2, 3) aufgesetzt ist.

7. Vorrichtung nach einem der vorhergehenden Ansprüche 1 bis 6, **dadurch gekennzeichnet, dass** eine Vielzahl der Güter (21) auf einem dem Zwischenlage-Vereinzelungstisch (1) abgesetzt sind, die auf einer Zwischenlage (22) ruhen, wenn der Abschiebebalken (5) eine vordere Stellung aufweist.

8. Vorrichtung nach einem der vorhergehenden Ansprüche 1 bis 7, **dadurch gekennzeichnet, dass** die Saugplatte (2, 3) die Zwischenlage (22) saugend festhält, während sich der Abschiebebalken (5) in Abschieberichtung (14) über die Zwischenlage (22) schiebt.

9. Vorrichtung nach einem der vorhergehenden Ansprüche 1 bis 8, **dadurch gekennzeichnet, dass** die Zwischenlage (22) gewichtsbedingt durch eine entstehende Öffnung nach unten fällt, welche Öffnung durch die mindestens eine falltürartig öffnende Saugplatte (2, 3) gebildet ist, wobei die geöffnete Saugplatte (2, 3) eine Wandunge ausbildet, welche eine Führung für die abfallende Zwischenlage (22) ausbildet, wodurch die Zwischenlagen (22) im unteren Bereich des Zwischen-Vereinzelungstisch (1) gesteuert abgestapelt sind.

10. Verfahren zur Entfernung von Zwischenlagen von palettierten Waren und Gütern (21), wobei die Waren und Güter (21) in einer übereinander liegenden Anordnung auf der Palette gelagert sind und vorzugsweise eine Zwischenlage (22) zwischen den einzelnen Schichten aufweisen, welche Zwischenlage (22) zusammen mit den Waren und Gütern (21) schichtweise auf einem Fördersystem abgelegt werden, welches die parallel abgesetzten Waren und Güter (21) seriell vereinzelt, wobei das Fördersystem einen Gurtförderer mit einer Saugplattform (2,3) aufweist, welche Saugplattform (2,3) die Zwischenlage (22) mittels Vakuum festhält, während die darauf lagernden Waren und Güter (21) mittels einem Abschiebebalken (5) von der Zwischenlage (22) in Förderrichtung des Gurtförderers abgeschoben werden und die Zwischenlage (22) mittels einem vakuumunterstützten Saugförderer in entgegen gesetzter Förderrichtung des Gurtförderers abtransportiert wird, **dadurch gekennzeichnet, dass** in dem Verfahrensschritt, bei dem die Zwischenlage (22) auf dem Saugtisch (2,3) aufliegt, der Saugtisch (2,3) mindestens halbiert ist und in der Art einer Klapptür nach unten wegklappt, um das Zwischenlagepapier (22) definiert nach unten abfallen zu lassen.

11. Verfahren nach Anspruch 10, welches nachfolgende Verfahrensschritte aufweist:
a. Ablegen einer ersten Schicht von auf einer Palette gelagerten Waren und Güter (21) zusammen mit einer zwischen den einzelnen Schichten angeordneten Zwischerilage (22) auf einem Fördersystem;
b. paralleles Ablegen der Waren und Güter (21) auf einem Fördersystem;
c. serielles vereinzeln der Waren und Güter (21)
- Ansaugen der Zwischenlage (22) mittels an Saugplatten (2, 3) angeordneten Saugdüsen (4) auf dem Gurtförderer (8) des Fördersystems;
- Abschieben der auf der Zwischenlage (22) angeordneten Waren und Güter (21) mittels einem Abschiebebalkens;
d. Aufschwenken mindestens einer Saugplatte (2, 3) nach unten
e. gesteuertes Abstapeln der nach unten fallenden Zwischenlagen (22) unterhalb des Zwischenlage-Vereinzelungstisch (1)

## Claims

1. Device for the removal of intermediate layers (22) from palletised commodities and goods (21), the commodities and goods (21) being stored in a mutually overlapping arrangement on the pallet and preferably having an intermediate layer (22) between the individual layers, said intermediate layer (22) being laid down in layers together with the commodities and goods (21) on a conveyor system which serially separates the commodities and goods (21) which are set down in parallel, the conveyor system comprising a belt conveyor having a vacuum platform (2, 3) as a vacuum table, said vacuum platform (2, 3) holding the intermediate layer (21) in place by vacuum, **characterised in that** the vacuum table is formed from at least two mutually separated suction plates (2, 3), at least one suction plate (2, 3) being pivotable in a horizontal plane in the manner of an arranged flap door.

2. Device according to claim 1, **characterised in that** the two suction plates (2, 3) are of approximately the same size and comprise a number of suction nozzles (4) which can be activated separately, the suction plates (2, 3) being separated from one another by a dividing plane (13).

3. Device according to either of the preceding claims 1 to 2, **characterised in that** a pusher beam (5) arranged above the suction plate (2, 3) is displaceably driven in the direction of the arrow (14) and in the opposite direction, said pusher beam (5) being connected to two conveyor belts (6, 7), each conveyor belt (6, 7) being part of a belt conveyor (8) which is connected via a force measurement means which assigns the goods as an intermediate layer or as commodities at a corresponding measured value.

4. Device according to any one of the preceding claims 1 to 3, **characterised in that** the at least one suction plate (2, 3) is pivotable by means of an arranged pivot cylinder (11, 12), each pivot cylinder (11, 12) being arranged on one end of the table and the upper, piston-side end thereof engaging on the pivotable part of the respective suction plate (2, 3).

5. Device according to any one of the preceding claims 1 to 4, **characterised in that** the pivot cylinder (11, 12) of the suction plate (2, 3) is in each case pivotable about a pivot axis (17, 18) in the directions of the arrows (19, 20), the suction plate (2, 3) thus being formed as a type of trap door.

6. Device according to any one of the preceding claims 1 to 5, **characterised in that** the suction plate (2, 3) comprises on the ramp thereof a metal transition sheet (15), which conveys the goods (21), pushed in the arrow direction (14) by the pusher beam (5), onto an adjacent conveyor system, said goods (21) having previously been set down on the surface of the suction plates (2, 3) from above in the direction of the arrow (16).

7. Device according to any one of the preceding claims 1 to 6, **characterised in that** a large number of the goods (21) are set down on the intermediate-layer separation table (1), and rest on an intermediate layer (22) when the pusher beam (5) is in a forward position.

8. Device according to any one of the preceding claims 1 to 7, **characterised in that** the suction plate (2, 3) holds the intermediate layer (22) in place by suction, whilst the pusher beam (5) slides over the intermediate layer (22) in the pushing direction (14).

9. Device according to any one of the preceding claims 1 to 8, **characterised in that** the intermediate layer (22) falls downwards under gravity through an opening which is produced, said opening being formed by the at least one suction plate (2, 3) which opens in the manner of a trap door, the open suction plate (2, 3) forming a wall which forms a guide for the falling intermediate layer (22) in such a way that the intermediate layers (22) are stacked in a controlled manner in the lower region of the intermediate-layer separation table (1).

10. Method for the removal of intermediate layers from palletised commodities and goods (21), the commodities and goods (21) being stored in a mutually overlapping arrangement on the pallet and preferably having an intermediate layer (22) between the individual layers, said intermediate layer (22) being laid down in layers together with the commodities and goods (21) on a conveyor system which serially separates the commodities and goods (21) which are set down in parallel, the conveyor system comprising a belt conveyor having a vacuum platform (2, 3), said vacuum platform (2, 3) holding the intermediate layer (22) in place by vacuum, whilst the commodities and goods (21) placed thereon are pushed from the intermediate layer (22) in the conveying direction of the belt conveyor by means of a pusher beam (5) and the intermediate layer (22) is transported away by a vacuum-assisted suction conveyor in the opposite conveying direction of the belt conveyor, **characterised in**
**that** in the method step in which the intermediate layer (22) is positioned on the vacuum table (2, 3), the vacuum table (2, 3) is divided into at least two parts and folds downwards in the manner of a flap door so as to allow the intermediate layer paper (22) to fall downwards in a defined manner.

11. Method according to claim 10, comprising the following method steps:
a. laying down a first layer of commodities and goods (21) stored on a pallet, together with an intermediate layer (22) arranged between the individual layers, on a conveyor system;
b. laying down the commodities and goods (21) in parallel on a conveyor system;
c. serially separating the commodities and goods (21)
- suctioning the intermediate layer (22) by means of suction nozzles (4), arranged on suction plates (2, 3), on the belt conveyor (8) of the conveyor system;
- pushing the commodities and goods (21) arranged on the intermediate layer (22) by means of a pusher beam;
d. pivoting at least one suction plate (2, 3) downwards,
e. stacking the intermediate layers (22) which fall downwards underneath the intermediate-layer separation table (1) in a controlled manner.

## Revendications

1. Dispositif pour retirer des feuilles intermédiaires (22) entre des produits et des matériaux (21) palettisés, étant précisé que les produits et matériaux (21) sont placés sur la palette en étant superposés et présentent de préférence une feuille intermédiaire (22) entre les couches individuelles, laquelle feuille intermédiaire (22) est déposée par couches avec les produits et matériaux (21) sur un système de convoyeur qui sépare en série les produits et matériaux (21) déposés parallèlement, le système de convoyeur comportant un convoyeur à bande avec, comme table d'aspiration, une plate-forme d'aspiration (2, 3) qui immobilise à l'aide du vide la feuille intermédiaire (21), **caractérisé en ce que** la table d'aspiration se compose d'au moins deux plaques d'aspiration (2, 3) séparées, au moins une plaque d'aspiration (2, 3) étant apte à pivoter dans un plan horizontal à la manière d'une trappe.

2. Dispositif selon la revendication 1, **caractérisé en ce que** les deux plaques d'aspiration (2, 3) ont à peu près la même taille et présentent un certain nombre de buses d'aspiration (4) aptes à être commandées séparément, les plaques d'aspiration (2, 3) étant séparées à l'aide d'un plan de séparation (13).

3. Dispositif selon l'une des revendications 1 à 2 précédentes, **caractérisé en ce qu'**une barre pousseuse (5) disposée au-dessus de la plaque d'aspiration (2, 3) est apte à être entraînée pour coulisser dans le sens de la flèche (14) et en sens inverse, laquelle barre pousseuse (5) est reliée à deux bandes transporteuses (6, 7), chaque bande transporteuse (6, 7) faisant partie d'un convoyeur à bande (8) relié à un dynamomètre qui, en présence d'une valeur de mesure correspondante, assure une affectation des matériaux comme feuille intermédiaire ou comme produit.

4. Dispositif selon l'une des revendications 1 à 3 précédentes, **caractérisé en ce que** la ou les plaques d'aspiration (2, 3) sont aptes à pivoter grâce à un vérin de pivotement (11, 12), chaque vérin de pivotement (11, 12) étant disposé à une extrémité de la table et agissant, à son extrémité supérieure située côté piston, sur la partie pivotante de la plaque d'aspiration (2, 3) correspondante.

5. Dispositif selon l'une des revendications 1 à 4 précédentes, **caractérisé en ce que** le vérin de pivotement (11, 12) de la plaque d'aspiration (2, 3) est apte à pivoter respectivement dans le sens des flèches (19, 20) sur un axe de pivotement (17, 18), moyennant quoi ladite plaque d'aspiration (2, 3) est conçue comme une sorte de trappe.

6. Dispositif selon l'une des revendications 1 à 5 précédentes, **caractérisé en ce que** la plaque d'aspiration (2, 3) présente à sa sortie une tôle de transition (15) qui amène sur un système de convoyeur prévu à la suite les matériaux (21) poussés dans le sens de la flèche (14) par la barre pousseuse (5), lesquels matériaux (21) sont au préalable déposés par le haut sur la surface des plaques d'aspiration (2, 3) dans le sens de la flèche (16).

7. Dispositif selon l'une des revendications 1 à 6 précédentes, **caractérisé en ce qu'**un grand nombre de matériaux (21) est déposé sur une table de séparation de feuille intermédiaire (1), lesquels matériaux sont posés sur une feuille intermédiaire (22) quand la barre pousseuse (5) présente une position avant.

8. Dispositif selon l'une des revendications 1 à 7 précédentes, **caractérisé en ce que** la plaque d'aspiration (2, 3) immobilise par aspiration la feuille intermédiaire (22) pendant que la barre pousseuse (5) se déplace dans le sens de poussée (14) sur ladite feuille intermédiaire (22).

9. Dispositif selon l'une des revendications 1 à 8 précédentes, **caractérisé en ce que** la feuille intermédiaire (22) tombe vers le bas, par gravité, par une ouverture qui se forme, laquelle ouverture est formée par la ou les plaques d'aspiration (2, 3) qui s'ouvrent à la manière d'une trappe, la plaque d'aspiration (2, 3) ouverte formant une paroi qui définit un guidage pour la feuille intermédiaire (22) qui tombe, moyennant quoi les feuilles intermédiaires (22) sont empilées de manière commandée dans la zone inférieure de la table de séparation de feuille intermédiaire (1).

10. Procédé pour retirer des feuilles intermédiaires entre des produits et des matériaux (21) palettisés, étant précisé que les produits et matériaux (21) sont placés sur la palette en étant superposés et présentent de préférence une feuille intermédiaire (22) entre les couches individuelles, laquelle feuille intermédiaire (22) est déposée par couches avec les produits et matériaux (21) sur un système de convoyeur qui sépare en série les produits et matériaux (21) déposés parallèlement, le système de convoyeur comportant un convoyeur à bande avec une plate-forme d'aspiration (2, 3) qui immobilise à l'aide du vide la feuille intermédiaire (21) pendant que les produits et matériaux (21) posés dessus sont expulsés de la feuille intermédiaire (22) à l'aide d'une barre pousseuse (5) dans le sens de transport du convoyeur à bande, et la feuille intermédiaire (22) est évacuée en sens inverse par rapport au sens de transport du convoyeur à bande à l'aide d'un convoyeur à aspiration à vide, **caractérisé en ce que** lors de l'étape pendant laquelle la feuille intermédiaire (22) se trouve sur la table d'aspiration (2, 3), la table d'aspiration (2, 3) est divisée en deux, au moins, et pivote vers le bas à la manière d'une trappe afin de laisser la feuille de papier intermédiaire (22) tomber vers le bas d'une manière définie.

11. Procédé selon la revendication 10, qui comprend les étapes suivantes :
a. dépôt, sur un système de convoyeur, d'une première couche de produits et matériaux (21) placés sur une palette, avec une feuille intermédiaire (22) disposée entre les couches individuelles,
b. dépôt parallèle des produits et matériaux (21) sur un système de convoyeur,
c. séparation en série des produits et matériaux (21)
- aspiration de la feuille intermédiaire (22) à l'aide de buses d'aspiration (4) disposées sur les plaques d'aspiration (2, 3), sur le convoyeur à bande (8) du système de convoyeur ;
- expulsion des produits et matériaux (21) disposés sur la feuille intermédiaire (22), à l'aide d'une barre pousseuse ;
d. ouverture d'au moins une plaque d'aspiration (2, 3) par pivotement vers le bas ;
e. empilage commandé, sous la table de séparation de feuille intermédiaire (1), des feuilles intermédiaires (22) qui tombent vers le bas.
